Europäisches Patentamt

(19) European Patent Office

Office européen des brevets

(11) Publication number: **0 056 779**
**B1**

(12) **EUROPEAN PATENT SPECIFICATION**

(45) Date of publication of patent specification: **18.09.85**

(21) Application number: **82630001.4**

(22) Date of filing: **08.01.82**

(51) Int. Cl.⁴: **F 16 D 49/00,** F 16 D 59/02, F 16 D 69/00, B 60 T 13/22

(54) Parking brake.

(30) Priority: **19.01.81 US 226263**

(43) Date of publication of application:
**28.07.82 Bulletin 82/30**

(45) Publication of the grant of the patent:
**18.09.85 Bulletin 85/38**

(84) Designated Contracting States:
**DE FR GB IT NL SE**

(56) References cited:
DE-A-1 530 980
DE-A-2 040 287
DE-A-2 055 677
FR-A-2 393 193
GB-A-1 074 876
GB-A-1 180 855
GB-A-1 378 495
US-A-2 051 967
US-A-2 960 190

(73) Proprietor: **GOODYEAR AEROSPACE CORPORATION**
**1210 Massillon Road**
**Akron, OH 44315 (US)**

(72) Inventor: **Anop, William Ivan**
**4936 Provens, Road**
**Akron Ohio 44319 (US)**
Inventor: **Evans, James Floyd**
**Route 3 Dogwood Heights**
**Berea Kentucky 40403 (US)**
Inventor: **Johnson, Michael Everett**
**10 Apache Drive**
**Paint Lick Kentucky 40461 (US)**
Inventor: **Dernovshek, Joseph Frank**
**Route 3 Dogwood Heights**
**Berea Kentucky 40403 (US)**
Inventor: **Spencer, Stanley Morris**
**Route 3 Dogwood Drive**
**Berea Kentucky 40403 (US)**

(74) Representative: **Weyland, Joseph Jean Pierre**
**Goodyear International Tire Technical Center**
**Patent Department Avenue Gordon Smith**
**L-7750 Colmar-Berg (LU)**

## Description

This invention relates to vehicle brakes and more particularly to a spring-applied and hydraulically released parking brake.

The invention concerns a spring-applied, hydraulically released parking brake for holding and maintaining a rotatable disk in a non-rotatable condition and including a piston housed in a cylinder bore and movable toward the disk by a series of Belleville springs for brake engagement and movable in the opposite direction for brake dis-engagement by a hydraulic pressure force. Such a parking brake will hereinafter be referred to as a parking brake of the kind defined, and a brake of this general type is known from DE—A—1 530 980.

It is noted that GB—A—1 378 495 and US—A—2 051 976 disclose brakes for mounting relatively to and engagement with the peripheral edge surface of a rotatable disk.

The present invention provides a static parking brake unit for engagement with the peripheral edge of a disk which is of simple mechanical construction, which is capable of applying a substantial braking force in a failsafe operational manner to maintain a vehicle in a static parked condition, and which can be easily serviced by rapid replacement of the braking surface.

Accordingly there is provided a parking brake of the kind defined characterized by a steel stud replaceably afixed to the piston and positioned coaxially with respect to a diameter of the disk for engagement with the peripheral edge thereof and having a plurality of transversely oriented protrusions to engage and penetrate the peripheral edge of the disk when the hydraulic pressure is released and the disk is not rotating. This brake is termed a static parking brake. Further embodiments of the invention are disclosed in the dependent claims.

For a more complete understanding of the invention and the advantages thereof reference should be made to the following detailed description and the accompanying drawings wherein the preferred embodiment is illustrated.

Figure 1 is a sectional side elevational view illustrating the parking brake in accordance with this invention as it may be mounted relative to a rotor of a disk brake system and being shown in a "brake engaged" position;

Figure 2 is an end view as may be taken on line 2—2 of Figure 1; and

Figures 3A and 3B are plan and side elevational views respectively of the disk engaging means showing the configuration of the protrusions.

Referring to the drawings, a parking brake in accordance with this invention is generally indicated by reference numeral 10. The device 10 is typically mounted in relative position to a disk 20 and preferably with respect to the peripheral edge 20a thereof. While in its present application the parking brake 10 is mounted in association with a conventional disk brake assembly and the disk 20 is the brake rotor of that assembly, it is anticipated that the invention may also be applied to the other static braking applications such as for example to maintain a disk flywheel or the like in a stationary position. In any case, the disk 20 must be rendered stationary to effect a static parking condition of the vehicle with which it is associated. In this respect, and in accordance with this invention, the disk 20 is stopped from its rotating condition by conventional braking techniques whereupon the parking brake 10 is rendered operational to effect maintaining of the disk 20 and therefor the vehicle in a static parked condition.

More particularly the parking brake 10 has a housing 12 that is provided with mounting flanges 12a on either side thereof and these are rigidly mounted via bolts 14 to a frame or other structural member 16. In this particular application the member 16 is a portion of a conventional disc brake assembly (not shown) that is used for dynamic braking of an off-the-road vehicle of the type having wheel mounted electric drive motors. The disk brake assembly is conventionally mounted at the end of the drive motor shaft associated with a pair of vehicle wheels and having the brake rotor 20 affixed thereto.

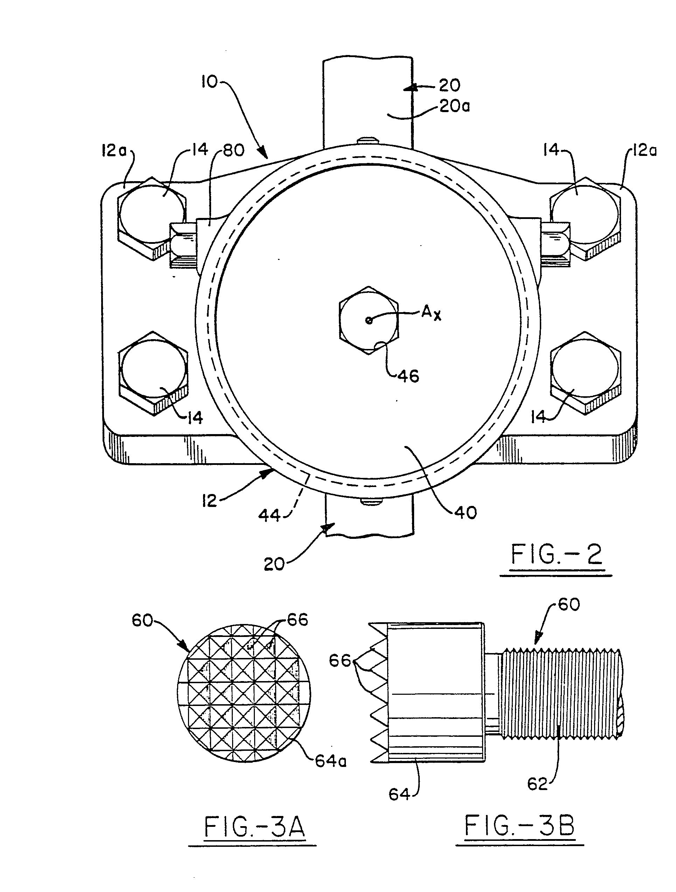

The brake housing 12 is substantially cylindrical and comprises a first bore $12b_1$ having a diameter D1 that is threaded at the open end 12d and terminates at a wall 12c at the opposite end thereof. The housing 12 has a second bore portion $12b_2$ in the wall 12c having a diameter D2, the bore portions $12b_1$ and $12b_2$ being coaxial with respect to a housing axis Ax. As illustrated in Figure 2, the mounting flanges 12a are located on either side of the housing axis such that when the parking brake 10 is bolted to a member 16, the housing 12 essentially straddles the peripheral edge 20a of the disk 20 and the Ax axis is aligned at a right angle to the disk edge 20a and coaxial with a disk diameter $D_d$.

A plug 40 is threadably received within the first bore portion $12b_1$ by reason of an annular flange 42 having threads 44 about its outer periphery that mate with the threaded portion 12d of the bore $12b_1$. The plug 40 has a stud portion 40a that depends into the housing and is coaxial with the Ax axis. To facilitate threading of the plug 40 into the housing bore $12b_1$, a recessed hex drive 46 is provided. Alternatively of course, an exterior drive nut may be provided on the plug 40 in the conventional manner.

A portion 50 is mounted for axial movement within the second bore portion $12b_2$ and it comprises an annular flange 52 that has a diameter substantially that of the first bore portion $12b_1$. The piston 50 is pressure sealed within the bore $12b_1$ by a seal 54 mounted about the periphery of flange 52 and is pressure sealed within the bore $12b_2$ by a seal 56 mounted within the housing wall 12c. The seal 54 is effected against the bore $12b_1$ while the seal 56 is effected against the piston head 50a. The inside face 50c of the piston carries a recess 58 that receives the stud end 40a of the plug 40 therein. The piston 50 further comprises a threaded bore 50b that terminates in an enlarged recess 50d at the outside end thereof. A stud 60 having a threaded shank 62 is received within the piston bore 50b. The stud 60 also has an enlarged head portion 64 that is seated within the piston recess 50d, the head portion having a plurality of protrusions 66 that are intended for engagement with the disk 20 as will be more fully described hereinafter. The protrusions 66 are of a hardened steel and while they may be of various configurations they will preferably be of a configuration that offers the greatest resistance to rotational motion of the disk 20. For example, and as illustrated in Figures 3A and 3B of the drawing, pyramidal configured protrusions 66 or continuous bars having substantially triangular cross-sections will provide a resistance to motion of the disk 20 when driven into the peripheral edge 20a of said disk. Of course, the number of protrusions, their configuration and size, will depend upon the particular installation and the requirements imposed by a specific sized disk 20.

Now therefore, and to effect engagement of the stud protrusions 66 with the disk 20, a plurality of Belleville springs 70 of a conventional type are mounted within the housing bore 12b₁ and about the stud portions 40a of the plug 40. The Belleville springs 70 are oppositely oriented one to the other to exert an axial force Fx on the piston 50 such as to move the stud 60 into peripheral-edge engagement with the disk 20. To disengage the stud 60, the spring bias must be overcome and the piston moved axially into the housing 12 and this is accomplished by hydraulic pressure exerted on the opposite side of the piston flange 52. The hydraulic pressure is provided via an input port 80 that has access into an annular space 82 provided between the piston flange 52 and the housing end wall 12c. Bleeder ports 84 are provided for bleed servicing of the parking brake in a convential manner.

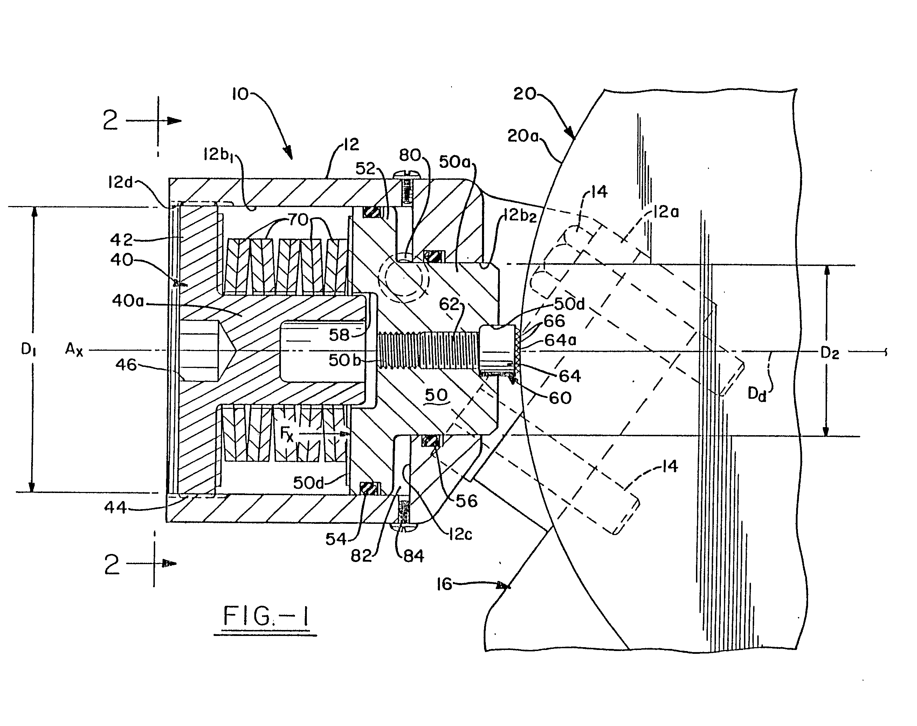

Axial motion of the brake piston 50 in the brake engaged position by action of the Belleville springs is limited by the end wall 12c, and axial motion of the piston in the brake disengaged position, by action of hydraulic pressure, is limited by the depth of the piston recess 58. As clearly illustrated in Figure 1, piston motion away from the disk 20 compresses the Belleville springs only to the extent of the engagement of the plug end 40a within the recess 58.

From the foregoing, it will be appreciated that the parking of this invention must be engaged only when the disk 20 is rendered stationary by other dynamic braking means. In this circumstance, the stud protrusions 66 will bite into the peripheral edge 20a of the disk to maintain the disk in its stationary and static condition. It will be recognized of course, in the event of hydraulic failure which maintains the brake in its disengaged position, the brake will be automatically engaged by action of the Belleville springs. Should the disc 20 be rotating when this occurs, the stud protrusions will be worn down by their action against the rotating disk. While this type emergency action will not be detrimental to the parking brake components, the stud 60 should be replaced to put the parking brake back into optimum service condition. Typically, a parking brake according to this invention will hold a static torque of 3070 Nm (50,000 lb-in.) with a release pressure of 93 bar (1350 psi) and a maximum pressure of 138 bar (2000 psi).

## Claims

1. A spring-applied, hydraulically released parking brake for holding and maintaining a rotatable disk (20) in a static non-rotating condition includes a piston (50) housed in a cylinder bore (12b₁, 12b₂) and movable toward the disk by a series of Belleville springs (70) for brake engagement and movable in the opposite direction for brake dis-engagement by a hydraulic pressure force , characterized by:
a steel stud (60) replaceably affixed to the piston (50) and positioned coaxially with respect to a diameter of the disk (20) for engagement with the peripheral edge (20a) thereof and having a plurality of transversely oriented protrusions (66) to engage and penetrate the peripheral edge of the disk when the hydraulic pressure is released and the disk is not rotating.

2. The parking brake as set forth in Claim 1 characterized by bar-shaped protrusions (66) having a substantially triangular cross-section.

3. The parking brake as set forth in Claim 1 characterized by protrusions (66) having a pyramid configuration.

## Patentansprüche

1. Federbelastete, hydraulisch gelöste Parkbremse zum Anhalten und Festhalten einer drehbaren Scheibe (20) in einem statischen, nicht drehenden Zustand, mit einem in einer Zylinderbohrung (12b₁, 12b₂) aufgenommenen Kolben (50), der gegen die Scheibe über eine Reihe von Belleville-Federn (70) zur bremsenden Anlage hin und in die entgegengesetzte Richtung zur Lösung der Bremse über eine hydraulische Druckkraft von der Scheibe weg bewegbar ist, gekennzeichnet durch einen Stahlbolzen (60), der auswechselbar an dem Kolben (50) befestigt und koaxial zu einem Durchmesser der Scheibe (20) zur Anlage an deren Umfangsfläche angeordnet ist, und der eine Vielzahl quergerichteten Vorsprüngen (66) zur Anlage und zum Eingriff an bzw. in die Umfangsfläche der Scheibe aufweist, wenn der Hydraulikdruck aufgehoben ist und die Scheibe nicht rotiert.

2. Parkbremse nach Anspruch 1, gekennzeichnet durch stabförmige Vorsprünge (66) mit im wesentlichen dreieckigem Querschnitt.

3. Parkbremse nach Anspruch 1, gekennzeichnet durch Vorsprünge (66) mit pyramidenförmiger Gestalt.

## Revendications

1. Frein de stationnement à serrage par ressorts et à desserrage hydraulique en vue de maintenir un disque rotatif (20) dans un état statique non rotatif et comprenant un piston (50) logé dans un alésage cylindrique ($12b_1$, $12b_2$), ce piston pouvant se déplacer vers le disque à l'intervention d'une série de ressorts Belleville (70) en vue du serrage du frein, tandis qu'il peut se déplacer dans la direction opposée en vue du desserrage du frein, à l'intervention d'une force de pression hydraulique, caractérisé par:

un goujon en acier (60) fixé de manière remplaçable au piston (50) et disposé coaxialement par rapport à un diamètre du disque (20) en vue de venir s'engager sur le bord périphérique (20a) de ce dernier, ce goujon comportant plusieurs saillies (66) orientées transversalement pour venir s'engager sur et pénétrer dans le bord périphérique du disque lorsque la pression hydraulique est relâchée et que le disque ne tourne pas.

2. Frein de stationnement selon la revendication 1, caractérisé par des saillies en forme de barres (66) ayant une section transversale pratiquement triangulaire.

3. Frein de stationnement selon la revendication 1, caractérisé par des saillies (66) ayant une configuration pyramidale.

FIG.-1

0 056 779

FIG.-2

FIG.-3A

FIG.-3B

2